# EUROPÄISCHE PATENTSCHRIFT

(11) **EP 1 738 849 B1**
(45) Veröffentlichungstag und Bekanntmachung des Hinweises auf die Patenterteilung: **27.07.2011**
(21) Anmeldenummer: 06116036.2
(22) Anmeldetag: 26.06.2006
(51) Int. Cl.: B23C 5/10

(54) **Schaftfräser**
End Mill
Fraise à queue

(30) Priorität: 27.06.2005 DE 102005030022; 23.12.2005 DE 102005062631
(43) Veröffentlichungstag der Anmeldung: 03.01.2007
(73) Patentinhaber: Sandvik Intellectual Property AB, 811 81 Sandviken (SE)
(72) Erfinder: WERMEISTER, Günther, 40667, Meerbusch (DE)
(74) Vertreter: Weber, Roland

(56) Entgegenhaltungen:
- EP-A- 0 934 788
- WO-A-01/45883
- WO-A-2005/021194
- DE-U1- 20 306 151
- US-A- 5 348 426
- US-A1- 2004 170 480
- PATENT ABSTRACTS OF JAPAN Bd. 1998, Nr. 14, 31. Dezember 1998 (1998-12-31) -& JP 10 249624 A (MITSUBISHI MATERIALS CORP), 22. September 1998 (1998-09-22)

## Beschreibung

Die vorliegende Erfindung betrifft einen Schaftfräser mit einem Schaft und einem Schneidenteil nach dem Oberbegriff des Anspruchs 1.

Ein entsprechender Fräser ist bekannt aus der EP-0934 788 A1. Das Schneidenteil eines solchen Fräsers besteht aus einem Stück und ist mit Hilfe einer Schraube lösbar an der Stirnseite des Schaftes befestigt wobei die Achse der Schraube sich im wesentlichen parallel zur Achse des Schaftes und durch eine sich durch das Schneidenteil erstreckende Bohrung in eine stirnseitig in den Schaft eingebrachte Gewindebohrung erstreckt.

Der aus der EP-0934 788 bekannte Schaftfräser weist in seinem Schaft eine zentrale, axiale Bohrung auf, in welche die das Schneidenteil ebenfalls zentral durchgreifende Befestigungsschraube eingesetzt wird. Im Stand der Technik sind auch Schneidenteile bekannt, die anstelle einer Bohrung einen integrierten, zentralen Gewindebolzen aufweisen, mit Hilfe dessen sie in der Gewindebohrung des Schaftes befestigt werden. Des weiteren sind auch Bohrer bekannt, die an ihrer Spitze ein einstückiges, auswechselbares Schneidenteil aufweisen. Zur Befestigung eines solchen Schneidenteils weist der Bohrerschaft an seiner Stirnseite beispielsweise eine hinterschnittene, teilkegelförmige Nut auf, in welche das Schneidenteil mit einem entsprechenden, seitlich hinterschnittenen Vorsprung eingeschoben und/oder nach Art eines Bajonettverschlusses eingedreht wird. Entsprechende Bohrwerkzeuge sind aber nicht zum Fräsen geeignet, sondern nur für das Bohren mit allein axialem Vorschub vorgesehen.

Aus dem US-Patent 5,348,426 ist ein Kugelstirnfräser bekannt, der einen einzelnen, scheibenförmigen Schneideinsatz aufweist, wobei am Schaft des Fräsers eine Nut vorgesehen ist, in welcher ein Ende des annährend kreisplattenförmigen, scheibenförmigen Schneideinsatzes eingeschoben wird. Der Schneideinsatz weist eine sich diametral durch den Scheibendurchmesser erstreckende Bohrung auf, die an der Stirnseite des Schneideinsatzes vom Zentrum weg versetzt ist und sich unter einem kleinen Winkel relativ zur Achse des Schaftes durch den scheibenförmigen Schneideinsatz und in eine entsprechende Aufnahmebohrung am Grund der Aufnahmenut in dem Schaft erstreckt. Ein solcher Fräser mit einem scheibenförmigen Schneideinsatz hat eine relativ geringe Stabilität.

Bei dem eingangs genannten und auch bei anderen bekannten Schaftfräsern sind die einander zugewandten Flächen des Schneidenteils und des Schaftes zusätzlich zu der Schraubverbindung auch mit zueinander passenden Strukturelementen versehen, welche zum einen die sichere Mitnahme des Schneidenteils bei der Rotation des Schaftes und zum anderen eine korrekte relative Ausrichtung zwischen Schneidenteil und Schaft gewährleisten sollen, wobei insbesondere ein sich am Umfang des Schneidenteils befindender Spanraum, der jeweils einer Schneide zugeordnet ist, mit einer Spannut am Schaft ausgerichtet ist. Dabei sind allerdings auch Werkzeuge bekannt, bei welchen der Schaft keinerlei Spannut oder dergleichen aufweist, sondern ein glatter, zylindrischer Schaft ist, an dessen Stirnseite sich ein Schneidenteil mit einem Schneiddurchmesser anschließt, welcher größer ist als der Durchmesser des Schaftes. Für manche Anwendungszwecke spielt die konkrete Ausgestaltung des Schaftes auch deshalb keine Rolle, weil die Bearbeitungstiefe im Werkstück geringer ist als die axiale Länge des Schneidenteils.

Ohnehin spielt die Spanabfuhr bei Schaftfräsern, welche in der Regel mit einem Vorschub senkrecht zur Fräserachse arbeiten, nur eine untergeordnete Rolle.

In vielen Anwendungsfällen ist es erwünscht, dass der Fräser gleichzeitig zwei unter einem Winkel zueinander angeordnete Flächen an einem Werkstück erzeugt. Hierzu zählen beispielsweise Stirnfräser. Ein üblicher Stirnfräser weist an seinem Umfang in einer Rotationsfläche um die Achse liegende Hauptschneiden auf, die am vorderen Ende des Schneidenteils in in etwa senkrecht zur Fräserachse verlaufende Nebenschneiden übergehen. Wenn bei derartigen Fräsern die Rotationsfläche der Hauptschneiden nicht senkrecht zu der Stirnfläche steht, d. h. wenn die Rotationsfläche mit der Achse des Fräsers einen Winkel von mehr als Null Grad einschließt, spricht man auch von Profilfräsern. Bei Stirnfräsern ist, wenn mindestens eine Nebenschneidkante sich bis nahe an das Zentrum der Fräserachse erstreckt, auch ein gewisser axialer Vorschub des Fräsers nach Art eines Bohrers oder eine kombinierte axiale und seitliche oder schraubenförmige Vorschubbewegung möglich.

Hierzu zählen im weitesten Sinn auch Kugelstirnfräser, bei welchen Schneiden gekrümmt von der Außenseite des Schaftes zu dessen Stirnseite verlaufen. Die Schneidenteile derartiger Fräser weisen aber wegen ihrer stirnseitig angeordneten Schneiden im allgemeinen keine durchgehende Befestigungsbohrung, sondern vielmehr auf der dem Schaft zugewandten Seite des Schneidenteils ein integriertes Befestigungselement, wie zum Beispiel einen integrierten Gewindebolzen, ein Endelement eines Bajonettverschlusses oder dergleichen, auf. Dies gilt ebenso auch für Bohrer mit auswechselbarem, einstückigen Schneidenteil. Derartige Schneidenteile mit komplexen Kupplungselementen und entsprechenden Gegenstücken am Werkzeugschaft sind jedoch in ihrer Herstellung aufwendig und mit der gewünschten, von anderen Schneidwerkzeugen mit fest integriertem Schneidenteil bekannten Genauigkeit nur sehr schwierig zu fertigen.

Die Schneidenteile bestehen nämlich zumeist aus Vollhartmetall, welches bei der Herstellung zunächst gepreßt und dann gesintert wird und beim Sintem eine erhebliche Schrumpfung erfährt, so daß eine Nachbearbeitung im allgemeinen unvermeidlich ist, wenn man präzise Werkzeuge mit bezüglich der Achse des Fräsers genau definiertem Schneidenverlauf herstellen will. Dies bedeutet, daß auch entsprechende Gewindeabschnitte oder vorspringende und rückspringende Bereiche eines Bajonettverschlusses mit entsprechender Präzision gefertigt, bzw. nachbearbeitet werden müssen. Auch der Werkzeugschaft, der zumeist aus herkömmlichem Werkzeugstahl besteht, muß entsprechend präzise gearbeitete Kupplungselemente bzw. Gegenstücke aufweisen, damit die Schneiden des Schneidenteils eine exakte geometrische Anordnung und Ausrichtung haben.

Dem gegenüber ist das Vorsehen einer Befestigungsbohrung im Schneidenteil und eine entsprechend präzise Anordnung der Gewindebohrung im Schaftteil vergleichsweise wenig aufwendig.

Der vorliegenden Erfindung liegt daher die Aufgabe zugrunde, einen Schaftfräser mit den eingangs genannten Merkmalen zu schaffen, welcher als Stirnfräser ausgebildet ist, so dass er zumindest in begrenztem Maße auch axiale Vorschubbewegungen ermöglicht, gleichzeitig eine stabile und präzise Anordnung der Schneiden bezüglich der Fräserachse sicherstellt und mit vergleichsweise geringerem Aufwand herstellbar ist als andere einschlägige Schaftfräser mit auswechselbarem Schneidenteil.

Diese Aufgabe wird durch die Merkmale des Anspruchs 1 gelöst, Erfindungsgemäβ ist der Schaftfräser dadurch gekennzeichnet, daß beide der einander zugewandten Flächen jeweils eine im Querschnitt rechtwinklige Nut und einen sich hierzu rechtwinklig erstreckenden und im Querschnitt rechtwinkligen Steg aufweist, der zu der Nut der jeweils gegenüber liegenden Fläche korrespondiert, und dass die Achse der Schraube in radialer Richtung bezüglich der Achse des Schaftes versetzt angeordnet ist und mindestens eine stirnseitig am Schneidenteil angeordnete Schneide auf der der Richtung des Versatzes abgewandten Seite bis nahe an die sich durch das Schneidenteil erstreckende Bohrung heranreicht.

Es versteht sich, daß auch die Bohrung im Schneidenteil ebenso wie die Gewindebohrung im Schaft in derselben Weise bezüglich der Achse des Schaftes versetzt angeordnet ist, wie die entsprechende Schraube, damit im Ergebnis das Schneidenteil dennoch bezüglich der Achse des Schaftes zentriert an dessen Stirnseite befestigt ist.

Aufgrund der an der Stirnseite des Schneidenteils angeordneten Schneide, die sich auf der der Richtung des Versatzes entgegengesetzten Seite an die in dem Schneidenteil vorgesehene Bohrung heran erstreckt, reicht eine solche stirnseitige Schneide deutlich näher an das Zentrum des Schaftfräsers heran, als dies bei einer zentral angeordneten Bohrung möglich wäre. Dies bedeutet gleichzeitig, daß die betreffende Schneide bei der Rotation des Fräsers nahezu die gesamte der Stirnseite des Schaftfräsers gegenüberliegende Fläche des Werkstücks erfaßt, möglicherweise mit Ausnahme eines kleinen Kernbereichs, wenn die sich durch das Schneidenteil erstreckende Befestigungsbohrung trotz ihres Versatzes noch die Achse des Schaftfräsers erfaßt.

Durch Bewegen des Fräsers in radialer Richtung werden jedoch auch die der Achse des Fräsers gegenüberliegenden Bereiche der Werkstückoberflächen von den stirnseitig angeordneten Schneiden erfaßt. Man erhält damit einen als Stimfräser ausgebildeten Schaftfräser, der die Vorteile der mit einem einstückigen Schneidenteil ausgerüsteten und im wesentlichen nur Umfangsschneiden aufweisenden Schaftfräser mit denjenigen herkömmlicher Stirnfräser vereint, die bisher nur durch aufwendigere und/oder weniger genaue Befestigungseinrichtungen mit einem auswechselbaren Schneidenteil realisiert werden konnten.

Dabei ist eine Ausführungsform der Erfindung bevorzugt, bei welcher das Schneidenteil an seiner Stirnseite mindestens drei Schneiden aufweist.

Zweckmäßigerweise verlaufen derartige Schneiden im wesentlichen in radialer Richtung und unter annähernd gleichen Winkelabständen entsprechend der Position von im wesentlichen axial verlaufenden, an der Umfangsseite des Schneidenteils angeordneten Hauptschneiden. Dabei kann es jedoch weiterhin zweckmäßig sein, wenn diese Schneiden in Umfangsrichtung nicht exakt die gleichen Winkelabstände von jeweils 120° zueinander aufweisen, sondern wenn diese Winkelabstände beispielsweise im Bereich von 115° bis 125° variieren. Dies kann zur Verminderung von Vibrationen und zu einem ruhigeren Lauf des Fräsers führen.

Wegen des Versatzes der zentralen Befestigungsbohrung und wegen des im wesentlichen radialen Verlaufs der stirnseitig angeordneten Schneiden ergibt sich zwingend, daß eine der Schneiden, die auf der der Richtung des Versatzes entgegengesetzten Richtung der Stirnseite des Schneidenteils angeordnet ist, deutlich länger sein kann als die beiden anderen Schneiden, die notwendigerweise an bzw. vor dem Rand der Befestigungsbohrung enden müssen, welche tendenziell in Richtung dieser Schneiden verschoben ist.

Gemäß der Erfindung weist eine der einander zugewandten Flächen des Schneidenteils und/oder des Schaftes eine im Querschnitt rechtwinklige Nut und die andere dieser Flächen einen korrespondierenden Steg mit rechtwinkligem Querschnitt auf. Ein solcher in eine Nut eingreifender Steg sorgt für eine sehr exakte Positionierung des Schneidenteils bezüglich des Schaftes zumindest in der zum Verlauf der Nut und des Steges senkrechten Richtung. Gleichzeitig sind derartige rechtwinklige Strukturen sehr einfach mit hoher Präzision herstellbar, insbesondere wesentlich einfacher, als konisch verlaufende bzw. hinterschnittene Nuten und Aussparungen oder Vorsprünge und Aussparungen von Bajonettverschlüssen.

Gemäß der Erfindung weisen die beiden einander zugewandten Flächen von Schneidenteil und Schaft jeweils sowohl eine im Querschnitt rechtwinklige Nut als auch einen sich hierzu rechtwinklig erstreckenden und im Querschnitt rechtwinkligen Steg auf, der zu der Nut der jeweils gegenüberliegenden Fläche korrespondiert.

Dies bedeutet im Ergebnis, daß das Schneidenteil bezüglich des Schaftes in zwei zueinander senkrechten Richtungen sehr präzise und genau festgelegt ist und damit exakt zentriert werden kann. Es versteht sich, daß die Nuten und Stege jeweils so angeordnet sind, daß dann, wenn diese Nuten und Stege wechselseitig in Eingriff treten, das Schneidenteil tatsächlich bezüglich der Achse des Schaftes genau zentriert ist, d.h. daß die an der Umfangsfläche des Schneidenteils angeordneten Schneiden bezüglich der Fräserachse zentriert sind, d.h. auf ein und derselben Umfangsfläche bzw. Rotationsfläche liegen.

In einer bevorzugten Ausführungsform der Erfindung ist vorgesehen, dass die einander zugewandten Flächen des Schneidenteils und des Schaftes als, abgesehen von den ineinander greifenden Vorsprüngen und Vertiefungen, ebene Anlageflächen ausgebildet sind.

Dabei ist es insbesondere vorteilhaft, wenn die einander zugewandten Flächen des Schneidenteils und des Schaftes als, zu der Achse (5) des Schaftes (1) und/ oder der Achse (4) der Bohrung des Schneidteiles (2) senkrechte Anlageflächen ausgebildet sind.

Diese ebenen Anlageflächen sorgen für eine exakte Ausrichtung des Schneidenteils im Verhältnis zum Schaft und damit für eine präzise Ausrichtung der Haupt und Nebenschneiden 13, bzw. 8, 8', 8", so dass die Hauptschneiden 13 genau auf einer gemeinsamen, einhüllenden Rotationsfläche, zum Beispiel einer Zylindermantelfläche, einer Konusfläche oder eines Ellipsoids oder Paraboloids, liegen, während die Nebenschneiden 8, 8' und 8" in einer gemeinsamen Ebene senkrecht zur Fräserachse bzw. auf einer gemeinsamen konischen Fläche mit Konuswinkel nahe 180° (z. B. 175° bis 178°) liegen.

Dabei kann es weiterhin zweckmäßig sein, wenn die Befestigungsbohrung, die durch das Schneidenteil verläuft und die entsprechende Gewindebohrung, die sich in den Schaft hinein erstreckt, die erwähnten Nuten bzw. Stege teilweise durchbricht, wobei aber ohne weiteres auch Ausführungsformen möglich sind, bei welchen die Befestigungsbohrung außerhalb bzw. neben den erwähnten Nuten und Stegen verläuft, indem die Nuten und Stege entsprechend versetzt gegenüber der Bohrung angeordnet sind. Die Nuten und Stege verlaufen zwar vorzugsweise symmetrisch zur Achse bzw. einer die Achse enthaltenden Ebene, wobei aber auch dieses Merkmal nicht zwingend realisiert sein muss, da die durch die Nuten und Stege zu bewirkende, exakte Zentrierung in gleicher Weise möglich ist, wenn eine oder beide Nuten in der gleichen Weise exzentrisch verlaufen wie die jeweils korrespondierenden, gegenüberliegenden Stege.

Weiter hat es sich im Sinn der vorliegenden Erfindung als günstig herausgestellt, wenn der Versatz der Achse(n) der Befestigungsbohrung(en) gegenüber der Schaftachse mindestens 1/30 des Fräserdurchmessers beträgt, wobei Werte für diesen Versatz, die sich zwischen 1/5 und 1/25, insbesondere zwischen 1/10 und 1/20 des durch die äußeren Schneiden definierten Fräserdurchmessers bewegen, besonders bevorzugt sind.

Dabei werden die Nuten und Stege zweckmäßigerweise so angeordnet, daß eines der ineinandergreifenden Paare aus Nuten und Stegen parallel und das andere der Paare aus Nuten und Stegen senkrecht zur Richtung des Versatzes verläuft. Die Nuten und Stege verlaufen außerdem symmetrisch zur zentralen Achse des Fräsers und weisen an ihren äußeren Ecken vorzugsweise Fasen auf.

Bezogen auf den Durchmesser der Schraube beträgt der Versatz der Befestigungsbohrungen der Schaftachse in einer bevorzugten Ausführungsform gegenüber dem Nenndurchmesser der Schraube mindestens 1/5 dieses Nenndurchmessers und kann beispielsweise Werte bis zum 1,5-fachen des Nenndurchmessers annehmen. Dabei ist zu berücksichtigen, daß eine entsprechende Befestigungsschraube in der Regel einen Kopf mit größerem Durchmesser aufweist, wobei der Versatz der Schraubenachse bezüglich der Schaftachse vorzugsweise nicht mehr als den Radius des Schraubenkopfes ausmachen sollte.

Bevorzugt ist eine Variante der Erfindung, bei welcher der Versatz der Schraubenachse bezüglich der Schaftachse des Fräsers etwa dem halben Nenndurchmesser der Schraube bzw. dem Radius des Gewindeabschnitts der Schraube entspricht.

Schließlich ist eine Ausführungsform der Erfindung bevorzugt, bei welcher die stirnseitigen Schneiden an ihrem radial äußeren Ende jeweils in Umfangsschneiden übergehen, die in einer gemeinsamen Rotationsfläche, insbesondere in einer gemeinsamen Zylinderfläche verlaufen, deren Achse mit der Schaftachse übereinstimmt.

In der bevorzugten Ausführungsfrom ist vorgesehen, dass der Spanwinkel der Nebenschneiden (8, 8', 8") im Bereich zwischen +8° und - 8°, vorzugsweise bei etwa 0° oder etwas darunter, z. B. zwischen 0 und -3° liegt.

Weitere Vorteile, Merkmale und Anwendungsmöglichkeiten der vorliegenden Erfindung werden deutlich anhand der folgenden Beschreibung einer bevorzugten Ausführungsform und der dazugehörigen Figuren. Es zeigen:
- Figur 1: eine perspektivische Ansicht eines erfindungsgemäßen Schachtfräsers,
- Figur 2: den Schaftfräser nach Figur 1 in einer perspektivischen Explosionsdarstellung,
- Figur 3: eine stirnseitige Ansicht auf den Schaftfräser nach Figur 1,
- Figur 4: eine perspektivische Ansicht des Schneidenteils von der vorderen Stirnseite her,
- Figur 5: eine perspektivische Ansicht des Schneidenteils von der rückwärtigen Stirnseite her,
- Figur 6: einen Schnitt entsprechend einer Schnittebene VI-VI in Figur 3,
- Figur 7: einen Schnitt entsprechend einer Schnittebene VII-VII in Figur 3.

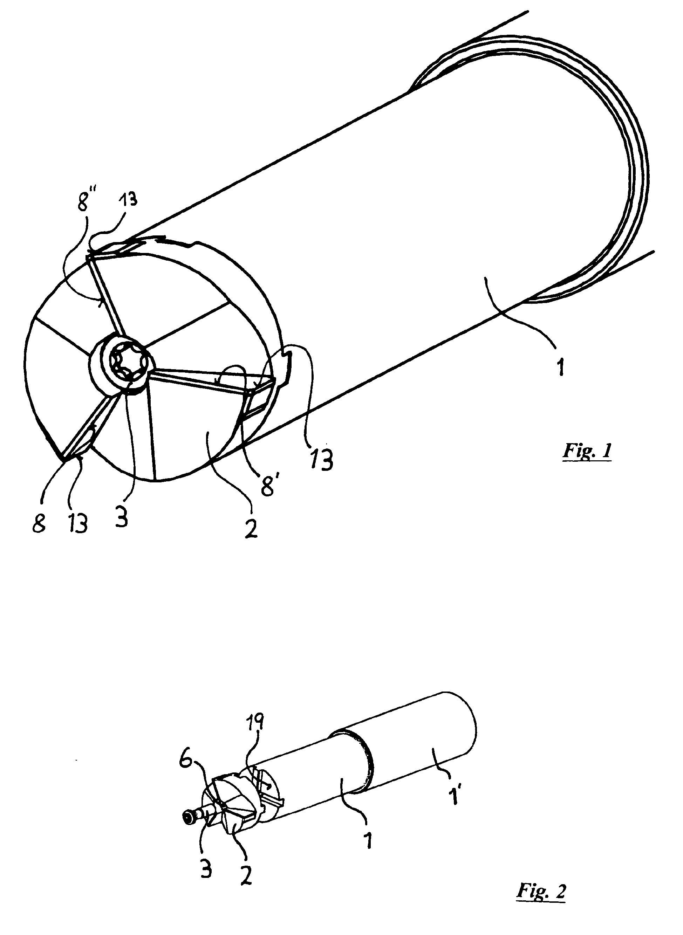

Man erkennt in Figur 1 einen Schaftfräser, der aus einem Schaft 1 und einem Schneidenteil 2 besteht, welches seinerseits aus einem Stück besteht und mit Hilfe einer Schraube 3 lösbar an der Stirnseite des Schaftes befestigt ist. Figur 2 zeigt denselben Schaftfräser in einer perspektivischen Explosionsdarstellung, so daß die drei wesentlichen Teile, nämlich der Schaft 1, das Schneidenteil 2 und die Schraube 3 als jeweils voneinander trennbare, einzelne Teile erkennbar sind, die in Verbindung insgesamt einen Schaftfräser bilden, der neben Umfangsschneiden 13 auch stirnseitige Schneiden 8, 8', 8" aufweist.

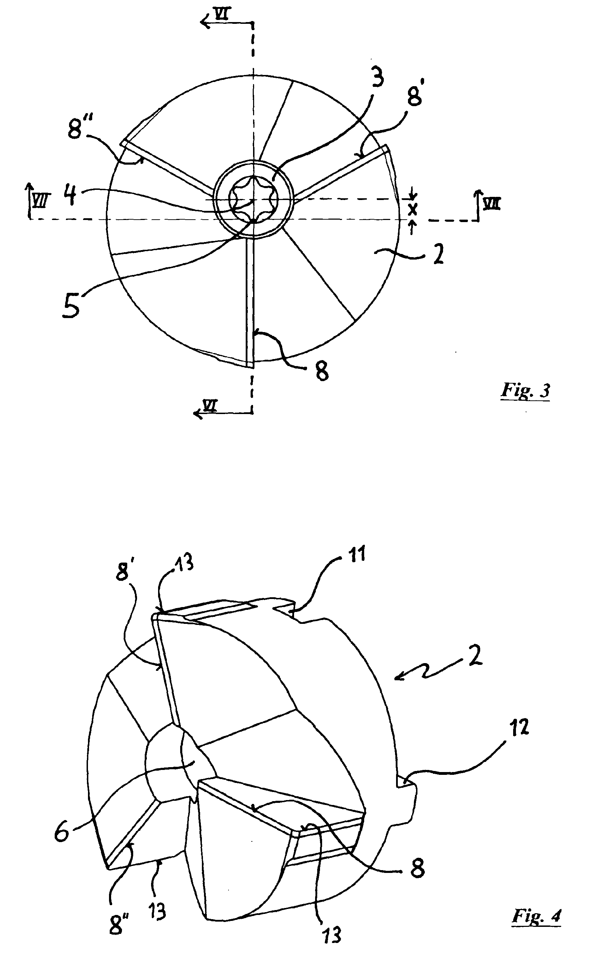

Weitere Details sind besser anhand der vergrößerten Darstellungen der Figuren 3 bis 8 erkennbar.

In einer stirnseitigen Draufsicht gemäß Figur 3 sieht man im wesentlichen das stirnseitige Schneidenteil 2 und die Befestigungsschraube 3, die im vorliegenden Fall mit einem sogenannten "Torx"-Antrieb ausgestattet ist, d.h. mit einer Öffnung in Form eines sechszackigen Sterns mit abgerundeten Spitzen und Übergängen, in welche ein entsprechend ausgestalteter Antriebschlüssel einsetzbar ist, um die Schraube 3 zu drehen.

Wie man in Figur 3 deutlich erkennt, ist die Achse 4 der Schraube 3 bezüglich der Achse 5 des Schaftes in radialer Richtung um einen Versatz "X" verschoben bzw. versetzt. Ein solcher Versatz bzw. "Offset" X entspricht bei dem dargestellten Ausführungsbeispiel in etwa dem halben Nenndurchmesser der Schraube und, bezogen auf den Nenndurchmesser des Schneidenteils, d.h. der von den äußeren Schneiden 13 definierten, zylindrischen Rotationsfläche, etwa 1/16. Weiterhin erkennt man an der Stirnseite des Schneidenteils 2 drei der in etwa unter gleichen Winkelabständen angeordneten Schneiden 8, 8', 8", die sich von den Umfangsschneiden bzw. Hauptschneiden 13 jeweils in Richtung des Zentrums bzw. der Achse 5 des Schaftes 1 erstrecken. Im dargestellten Ausführungsbeispiel verlaufen die drei stirnseitigen Schneiden 8, 8' und 8" unter relativen Winkeln von jeweils 120° an der Stirnseite des Schneidenteils 2.

Wie man außerdem leicht erkennt, ist die Schneide 8, die am stirnseitigen Rand der Befestigungsbohrung 6 endet, aufgrund des Versatzes der Befestigungsbohrung 6 bezüglich der Achse 5 des Schaftes 1, die auch mit der geometrischen Achse des Schneidenteils 2 zusammenfällt, deutlich länger und reicht näher an die zentrale Achse 5 heran, als die beiden anderen Schneiden 8', 8", die in dieser Ausführungsform gleich lang sind und ebenfalls am Rand der Befestigungsbohrung 6 enden, wobei diese Bohrung aber in Richtung des Verlaufs der Schneiden 8', 8" und vom Zentrum bzw. der Achse 5 des Schaftes aus gemessen wesentlich weiter reicht als in Richtung der Schneide 8. Die Schneide 8 ist, wie man anhand der Figur 3 leicht erkennt, in dieser Ausführungsform genau entgegengesetzt der Richtung des Versatzes X angeordnet, d.h. in der radialen Richtung, in der die Befestigungsbohrung 6 vom Zentrum 5 des Schneidenteils bzw. Schaftes aus gesehen, die geringste Erstreckung hat.

Es versteht sich, daß die drei Schneiden 8, 8', 8" anstelle der dargestellten bevorzugten Anordnung auch leicht um einen gemeinsamen Winkel von 10° bis vielleicht 30° verdreht werden könnten, ohne daß sich an diesen grundsätzlichen Unterschieden einer längeren, näher an das Zentrum heranreichenden Schneide und zwei kürzeren (gegebenenfalls auch unterschiedlich kurzen) Schneiden 8' bzw. 8" Wesentliches ändern würde. Zweckmäßigerweise sollte jedoch die Schneide 8 in einem Bereich von ± 30°, vorzugsweise von ± 15° um die dem Versatz entgegengesetzte Richtung angeordnet sein und die übrigen Schneiden 8', 8" sind dann bezüglich der Schneide 8 um + bzw. -120° in Umfangsrichtung versetzt angeordnet, wobei auch dieser relative Versatz in Umfangsrichtung leicht variieren kann und beispielsweise zwischen 115 und 125° betragen kann.

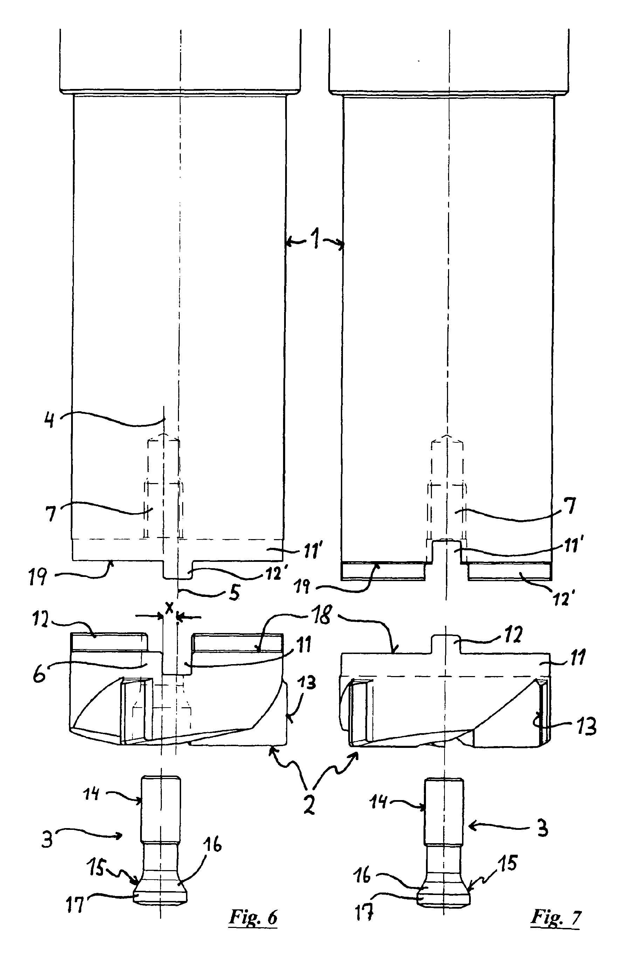

Es versteht sich, daß für die Länge der Schneiden 8, 8' und 8" der Durchmesser der Befestigungsbohrung an der vorderen Stirnseite des Schneidenteils 2 entscheidend ist und nicht der Nenndurchmesser der Befestigungsbohrung bzw. der Befestigungsschraube 3, da die Befestigungsschraube 3 einen Kopf 15 aufweist, welcher notwendigerweise einen größeren Durchmesser hat als der Gewindeabschnitt 14 der Schraube 3. Dies wird insbesondere in Figur 6 deutlich erkennbar.

Die Durchgangsbohrung in dem Schneidenteil, ebenso wie die Gewindebohrung im Schaftteil 1 sind dabei gestrichelt dargestellt, ebenso wie auch die oben beschriebenen Nuten 11, 11'. Figur 7 ist eine der Figur 6 sehr ähnliche Ansicht, jedoch mit einer um 90° verdrehten Blickrichtung entsprechend den Schnittlinie VII-VII in Figur 3. Wie man zunächst erkennt, ist die Gewindebohrung 7 in dem Schaftteil 1 um einen Betrag X nach links versetzt, der etwas kleiner ist als der Radius der Gewindebohrung 7 und somit auch etwas kleiner als der Nenndurchmesser der Schraube. Bezogen auf den Fräserdurchmesser beträgt dieser Versatz in etwa 1/16, wobei sich der durch die Umfangsschneiden 13 definierte Fräserurchmesser bei dem dargestellten Ausführungsbeispiel nur geringfügig von dem Schaftdurchmesser unterscheidet und somit auch auf den Schaftdurchmesser bezogen der Versatz X in etwa 1/16 beträgt, wobei dieser Wert im übrigen zwischen etwa 1/5 und etwa 1/30 variieren kann.

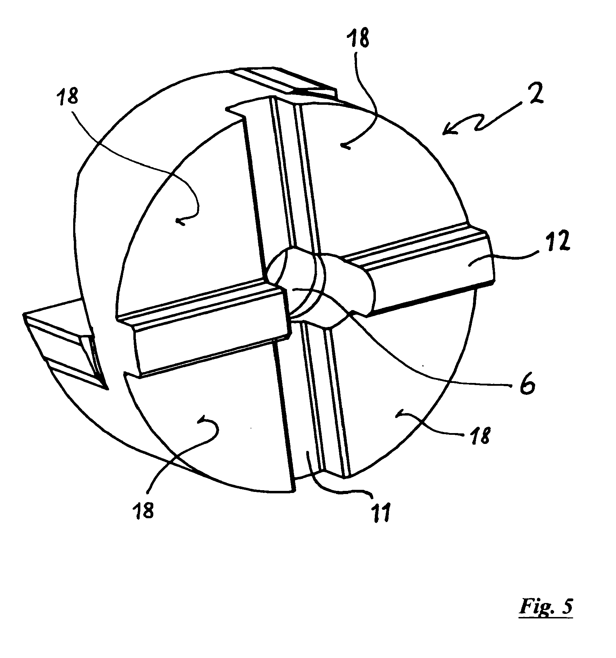

Weiterhin erkennt man einen von der Stirnseite des Schaftes 1 ausgehenden und einen im wesentlichen rechtwinkligen Querschnitt aufweisenden Steg 12', sowie im Schneidenteil 2 eine entsprechende, im Querschnitt rechtwinklige Nut 11'. Senkrecht zu der Nut 11' verläuft am Schneidenteil auf der dem Schaft 1 zugewandten Seite ein Steg 12' mit rechtwinkligem Querschnitt, der in eine passende Nut 11' an der Stirnseite des Schaftes 1 eingreift. In der um 90° gedrehten Darstellung gemäß Figur 5 erkennt man nochmals dieselben Stege 12, 12' und Nuten 11, 11', wobei nunmehr aber der Steg 12 und die Nut 11' im Querschnitt und der Steg 12' und die Nut 11 in der Seitenansicht zu erkennen sind.

Man sieht außerdem in Figur 4, daß die Befestigungsbohrung 6 am Schneidenteil 2 ebenso wie die Gewindebohrung am Schaftteil 1 die erwähnten Stege 12, 12' und Nuten 11, 11' teilweise durchgreift.

Die Befestigungsschraube 3 hat einen Gewindeabschnitt 14 und einen Kopf 15, der eine konische Klemmfläche 16 und einen zylindrischen Kopfabschnitt 17 aufweist. Die Befestigungsbohrung 6 ist komplementär zu der Schraube 3 ausgebildet, so daß die Befestigungsbohrung 6 stirnseitig einen dem Kopfdurchmesser angepaßten Bohrungsdurchmesser hat, der eine konische Übergangsfläche zu einem engeren Bohrungsabschnitt hat, wobei die entsprechenden konischen Flächen des Schraubenkopfes und der Befestigungsbohrung 6 beim Festziehen der Schraube in der Gewindebohrung 7 in festen Klemmeingriff treten, während gleichzeitig die im Querschnitt rechtwinkligen Nuten und Stege ineinander eingreifen und eine exakte Ausrichtung der geometrischen Achse des Schneidenteils 2 mit der Achse des Schaftteils garantieren.

Wie man sieht, können dabei die Ecken der Stege 11, 11' und der Nuten 12, 12' leicht angefast sein, um ein Einführen der Stege und Nuten zu erleichtern, die ansonsten mit hoher Paßgenauigkeit hergestellt sind und ein in radialer Richtung spielfreies Zusammensetzen von Schneidteil und Schaft 1 erlauben.

Während die Stege 12, 12' und die Nuten 11, 11' in erster Linie der genauen Zentrierung und drehfesten, spielfreien Verbindung von Schaft 1 und Schneidenteil 2 dienen, sorgen die durch die Stege und Nuten im wesentlichen in vier Quadranten aufgeteilten, ebenen Anlageflächen 18 bzw. 19 für eine präzise Ausrichtung der Haupt und Nebenschneiden 13, bzw. 8, 8', 8", so dass die Hauptschneiden 13 genau auf einer gemeinsamen, einhüllenden Rotationsfläche, im vorliegenden Fall einer Zylindermantelfläche, und die Nebenschneiden 8, 8' und 8" in einer gemeinsamen Ebene senkrecht zur Fräserachse bzw. auf einer gemeinsamen konischen Fläche mit Konuswinkel nahe 180° (z. B. 176° bis 178°) liegen. Mit anderen Worten: die Nuten und Stege sorgen für eine präzise axiale Zentrierung und die Anlageflächen 18, 19 sorgen für eine präzise Ausrichtung von Schneidenteil 2 und Schaft 1 bzw. für eine exakte Parallelität der Achsen 5 und 4 von Schaft bzw. Schneidenteil. Diese "Aufgabenteilung" verschiedener Bestandteile der Kupplung zwischen Schaft 1 und Schneidenteil 2 ermöglicht die Konzentration auf jeweils eine Teilaufgabe der genannten Komponenten, was insbesondere dann, wenn alle Flächen der Nuten, der Stege (mit Ausnahme der Anfasungen der Kanten) und die Anlageflächen 18, 19 aus ausschließlich senkrecht zueinander verlaufenden Abschnitten bestehen. Das heißt beliebige Flächen der Schnittstelle zwischen Schaft und Schneidenteil verlaufen entweder parallel oder senkrecht zueinander. Solche Flächen sind relativ leicht mit hoher Präzision herstellbar.

Aus der Anordnung der Gewindebohrung 7 im Schaft 1 in den Figuren 6 und 7 erkennt man, daß der Steg 11' und die Nut 12 genau in Richtung des Versatzes zentral im Schaft- bzw. Schneidenteil verlaufen, während in Figur 6, die eine Ansicht zeigt, in welcher der Versatz der Befestigungsbohrung 7' maximal erscheint, der Steg 11 und die Nut 12' erkennbar sind, welche senkrecht zu dieser Richtung des Versatzes X verlaufen. Die jeweils äußeren Kanten der Stege und Nuten sind mit Fasen versehen, wie man vor allem in Figur 5 erkennt. Die dem Schneidenteil zugewandte Stirnfläche des Schaftes 2 ist komplementär zu der dem Schaft zugewandten und in Figur 5 dargestellten rückwärtigen Fläche des Schneidenteils ausgebildet, d. h. beide Fläche sind, abgesehen von der relativen Anordnung der Gewindebohrung bzw. des Schraubenloches, in der bevorzugten Ausführungsform identisch ausgebildet und werden lediglich um 90° gegeneinander verdreht, um sie passend zusammensetzen zu können, wobei die Stege 11, 11' in die gegenüberliegenden Nuten 12, 12' eingreifen.

Der Schaftfräser ist vergleichsweise einfach herstellbar, auch wenn das Schneidenteil aus Vollhartmetall hergestellt ist. Der Schaft kann ebenfalls aus Hartmetall, Schwermetall wie. Z. B. Densimet oder aus hochlegiertem Werkzeugstahl bestehen. Die zu verwendende Schraube 3 ist als genormtes Bauteil von verschiedenen Herstellern erhältlich. Die rechtwinkligen Profile der Stege und Nuten, die bezüglich der Schaftachse 5 jeweils symmetrisch und in zueinander senkrechten Richtungen verlaufen, sind, ebenso wie die ebenen und zur Fräserachse vorzugsweise senkrecht verlaufenden axialen Anlageflächen, mit einfachen Mitteln relativ präzise herstellbar, so daß sie mit hoher Paßgenauigkeit und exakter Zentrierung des Schneidenteils 2 bezüglich des Schaftteils 1 zusammengesetzt werden können. Die Befestigungsbohrung 6 und die entsprechende Gewindebohrung 7 dienen in Verbindung mit der Schraube 3 im wesentlichen dem sicheren Halt des Schneidenteils 2 am Schaft 1, dienen jedoch nicht mehr einer exakten Positionierung, da diese bereits durch die Stege 12, 12' und Nuten 11, 11' festgelegt ist. Es versteht sich jedoch, daß selbstverständlich auch die Gewindebohrung 7 und die entsprechende Befestigungsbohrung 6 mit der ausreichenden Genauigkeit hergestellt werden, um übermäßige einseitige Belastungen der Schraube und des Schneidenteils zu vermeiden.

## Patentansprüche

1. Schaftfräser mit einem Schaft (1) und einem Schneidenteil (2), welches aus einem Stück besteht und mit Hilfe einer Schraube (3) lösbar an der Stirnseite des Schaftes (1) befestigt ist, wobei die Achse (4) der Schraube (3) sich im wesentlichen parallel zur Achse (5) des Schaftes (1) und durch eine sich durch das Schneidenteil (2) erstreckende Bohrung (6) in eine stirnseitig in den Schaft (1) eingebrachte Gewindebohrung (7) erstreckt, wobei mindestens eine der einander zugewandten Flächen des Schneidenteils (2) und des Schaftes (1) einen Vorsprung und die andere dieser Flächen eine korrespondierende Vertiefung zur passgenauen Aufnahme des Vorsprunges aufweist, **dadurch gekennzeichnet, dass** beide der einander zugewandten Flächen jeweils eine im Querschnitt rechtwinklige Nut (11,11') und einen sich hierzu rechtwinklig erstreckenden und im Querschnitt rechtwinkligen Steg (12', 12) aufweist, der zu der Nut (11, 11') der jeweils gegenüber liegenden Fläche korrespondiert, und dass die Achse (4) der Schraube (3) in radialer Richtung bezüglich der Achse (5) des Schaftes (1) versetzt angeordnet ist und mindestens eine stirnseitig am Schneidenteil (2) angeordnete Schneide (8) auf der der Richtung des Versatzes abgewandten Seite bis nahe an die sich durch das Schneidenteil (2) erstreckende Bohrung (6) heranreicht.

2. Schaftfräser nach Anspruch 1, **dadurch gekennzeichnet, daß** das Schneidenteil (2) an seiner Stirnseite mindestens drei Schneiden (8, 8', 8")aufweist.

3. Schaftfräser nach Anspruch 1 oder 2, **dadurch gekennzeichnet, dass** die einander zugewandten Flächen des Schneidenteils und des Schaftes als, abgesehen von den ineinander greifenden Vorsprüngen und Vertiefungen, ebene Anlageflächen ausgebildet sind.

4. Schaftfräser nach Anspruch 3, **dadurch gekennzeichnet, dass** die einander zugewandten Flächen des Schneidenteils und des Schaftes als, zu der Achse (5) des Schaftes (1) und/ oder der Achse (4) der Bohrung des Schneidteiles (2) senkrechte Anlageflächen ausgebildet sind.

5. Schaftfräser nach einem der Ansprüche 1 bis 4, **dadurch gekennzeichnet, daß** die Befestigungsbohrungen (6, 7) die Vertiefungen (z. B. Nuten 11.11') und Vorsprünge (z. B. Stege 12.12') teilweise durchbrechen.

6. Schaftfräser nach einem der Ansprüche 1 bis 5, **dadurch gekennzeichnet, daß** der Versatz (X) der Befestigungsbohrungen (6, 7) gegenüber der Schaftachse (5) mindestens 1/30 des Fräserdurchmessers beträgt.

7. Schaftfräser nach einem der Ansprüche 1 bis 6, **dadurch gekennzeichnet, daß** eines der ineinander greifenden Paare aus Nuten (11, 11') und Stegen (12, 12') parallel und das andere senkrecht zur Richtung des Versatzes erstreckt.

8. Schaftfräser nach einem der Ansprüche 1 bis 7, **dadurch gekennzeichnet, daß** der Versatz der Befestigungsbohrungen gegenüber der Schaftachse (5) mindestens 1/5 des Nenndurchmessers der Schraube (3) beträgt.

9. Schaftfräser nach einem der Ansprüche 1 bis 8, **dadurch gekennzeichnet, daß** die stirnseitigen Schneiden (8, 8', 8") an ihrem radial äußeren Ende jeweils in Umfangsschneiden (13) übergehen, die in einer gemeinsamen Rotationsfläche, insbesondere einer Zylinderfläche, verlaufen, deren Achse mit der Schaftachse (5) übereinstimmt.

10. Schaftfräser nach einem der Ansprüche 1 bis 9, **dadurch gekennzeichnet, daß** der Spanwinkel der Nebenschneiden (8, 8', 8") im Bereich zwischen +8° und -8°, vorzugsweise bei etwa 0° oder etwas darunter liegt.

## Claims

1. An end milling cutter comprising a shank (1) and a cutting portion (2) which comprises one piece and which is releasably fixed by means of a screw (3) to the end of the shank (1), wherein the axis (4) of the screw (3) extends substantially parallel to the axis (5) of the shank (1) and through a bore (6) extending through the cutting portion (2), into a screwthreaded bore (7) provided in the shank (1) at the end thereof, wherein at least one of the mutually facing surfaces of the cutting portion (2) and the shank (1) has a projection and the other of those surfaces has a corresponding recess for receiving the projection in accurately fitting relationship, **characterised in that** both of the mutually facing surfaces each has a groove (11, 11') of right-angled cross-section and a leg (12', 12) which extends at a right angle thereto and which is of a right-angled cross-section and which corresponds to the groove (11, 11') of the respective oppositely disposed surface, and that the axis (4) of the screw (3) is arranged offset in a radial direction with respect to the axis (5) of the shank (1) and at least one cutting edge (8) arranged on the cutting portion (2) at the end thereof on the side that is remote from the direction of the offset extends to close to the bore (6) extending through the cutting portion (2).

2. An end milling cutter according to claim 1 **characterized in that** the cutting portion (2) has at least three cutting edges (8, 8', 8") at its end.

3. An end milling cutter according to claim 1 or 2 **characterised in that** the mutually facing surfaces of the cutting portion and the shank are in the form of contact surfaces which are flat apart from the interengaging projections and recesses.

4. An end milling cutter according to claim 3 **characterised in that** the mutually facing surfaces of the cutting portion and the shank are in the form of contact surfaces which are perpendicular to the axis (5) of the shank (1) and/or the axis (4) of the bore of the cutting portion (2).

5. An end milling cutter according to one of claims 1 to 4 **characterised in that** the fixing bores (6, 7) partially break through the recesses (for example grooves 11, 11') and projections (for example legs 12, 12').

6. An end milling cutter according to one of claims 1 to 5 **characterised in that** the offset (X) of the fixing bores (6, 7) with respect to the axis (5) of the shank is at least 1/30 of the milling cutter diameter.

7. An end milling cutter according to one of claims 1 to 6 **characterised in that** one of the interengaging pairs of grooves (11, 11') and legs (12, 12') extends parallel and the other perpendicularly to the direction of the offset.

8. An end milling cutter according to one of claims 1 to 7 **characterised in that** the offset of the fixing bore with respect to the axis (5) of the shank is at least 1/5 of the nominal diameter of the screw (3).

9. An end milling cutter according to one of claims 1 to 8 **characterised in that** the end cutting edges (8, 8', 8") at their radially outer end each go into peripheral cutting edges (13) which extend in a common rotational surface, in particular in a cylinder surface, the axis of which coincides with the axis (5) of the shank.

10. An end milling cutter according to one of claims 1 to 9 **characterised in that** the chip angle of the secondary cutting edges (8, 8', 8") is in the range of between +8° and -8°, preferably about 0° or somewhat therebelow.

## Revendications

1. Fraise à queue comportant une queue (1) et une pièce de coupe (2) qui est d'une seule pièce et qui est fixée au côté frontal de la queue (1) de façon amovible à l'aide d'une vis (3), l'axe (4) de la vis (3) s'étendant sensiblement parallèlement à l'axe (5) de la queue (1) et dans un taraudage (7), ménagé frontalement dans la queue (1), par un perçage (6) s'étendant à travers la pièce de coupe (2), au moins une des faces, dirigées l'une vers l'autre, de la pièce de coupe (2) et de la queue (1) comportant une saillie et l'autre de ces faces comportant une cavité correspondante destinée à recevoir de façon ajustée la saillie, **caractérisée en ce que** les deux faces dirigées l'une vers l'autre comportent chacune une gorge (11, 11') de section rectangulaire et une nervure (12, 12'), s'étendant perpendiculairement à ladite face et de section rectangulaire, qui correspond à la gorge (11, 11') de la face opposée, et **en ce que** l'axe (4) de la vis (3) est disposée en étant décalée radialement par rapport à l'axe (5) de la queue (1) et au moins une arête (8) disposée frontalement sur la pièce de coupe (2) arrive, du côté opposé à la direction du décalage, au voisinage du perçage (6) s'étendant à travers la pièce de coupe (2).

2. Fraise à queue selon la revendication 1, **caractérisée en ce que** la pièce de coupe (2) comporte sur son côté frontal au moins trois arêtes (8, 8', 8").

3. Fraise à queue selon la revendication 1 ou 2, **caractérisée en ce que** les faces, dirigées l'une vers l'autre, de la pièce de coupe et de la queue sont conformées en faces d'appui planes, à l'exception des saillies et des cavités s'engageant l'une dans l'autre.

4. Fraise à queue selon la revendication 3, **caractérisée en ce que** les faces, dirigées l'une vers l'autre, de la pièce de coupe et de la queue sont conformées en faces d'appui perpendiculaires à l'axe (5) de la queue (1) et/ou à l'axe (4) du perçage de la pièce de coupe (2).

5. Fraise à queue selon l'une des revendications 1 à 4, **caractérisée en ce que** les perçages de fixation (6, 7) traversent partiellement les cavités (par exemple les gorges 11, 11') et les saillies (par exemple les nervures 12, 12').

6. Fraise à queue selon l'une des revendications 1 à 5, **caractérisée en ce que** le décalage (X) des perçages de fixation (6, 7) par rapport à l'axe (5) de la queue est égal à au moins 1/30 du diamètre de la fraise.

7. Fraise à queue selon l'une des revendications 1 à 6, **caractérisée en ce que** l'une des paires de gorges (11, 11') et nervures (12, 12'), s'engageant l'une dans l'autre, s'étend parallèlement à la direction du décalage et l'autre paire s'étend perpendiculairement à celle-ci.

8. Fraise à queue selon l'une des revendications 1 à 7, **caractérisée en ce que** le décalage des perçages de fixation par rapport à l'axe (5) de la queue est égal à au moins 1/5 du diamètre nominal des vis (3).

9. Fraise à queue selon l'une des revendications 1 à 8, **caractérisée en ce que** les arêtes frontales (8, 8', 8") se transforment à leur extrémité radialement extérieure en arêtes périphériques (13) qui s'étendent dans une face de rotation commune, notamment une face cylindrique, dont l'axe coïncide avec l'axe (5) de la queue.

10. Fraise à queue selon l'une des revendications 1 à 9, **caractérisée en ce que** l'angle d'attaque des arêtes secondaires (8, 8', 8") est dans une plage comprise entre +8° et -8°, de préférence d'environ 0° ou un peu moins.
